# FASCICULE DE BREVET EUROPEEN

(11) **EP 2 978 632 B1**
(45) Date de publication et mention de la délivrance du brevet: **10.07.2019**
(21) Numéro de dépôt: 14711992.9
(22) Date de dépôt: 25.03.2014
(51) Int. Cl.: B60N 2/58, B60N 2/42, B60N 2/68, B60N 2/70, B60N 2/427, B64D 11/06

(54) **DOSSIER DE SIEGE DE VEHICULE COMPORTANT UNE ZONE FRAGILISEE APTE A SE DECHIRER**
RÜCKENLEHNE EINES FAHRZEUGSITZES MIT EINEM GESCHWÄCHTEN BEREICH WELCHER AUSEINANDERREISSEN KANN
BACKREST OF A VEHICLE SEAT HAVING A FRAGILE ZONE WHICH MAY TEAR APART

(30) Priorité: 26.03.2013 FR 1352712
(43) Date de publication de la demande: 03.02.2016
(73) Titulaire: Expliseat, 75006 Paris (FR)
(72) Inventeur: SAADA, Benjamin, Jacob, F-75002 Paris (FR); SAMUELIAN, Jean-Charles, Marcel, F-75005 Paris (FR); TEJEDOR, Vincent, F-92130 Issy les Moulineaux (FR)
(74) Mandataire: Brevalex
(86) Numéro de dépôt international: PCT/EP2014/055921
(87) Numéro de publication internationale: WO 2014/154667

(56) Documents cités:
- DE-A1-102012 011 431
- US-A1- 2006 255 633

## Description

### Domaine technique

La présente invention concerne le domaine des transports, entre autres collectifs, de passagers, notamment par la route, le rail ou l'air.

Elle concerne plus particulièrement la réalisation d'un dossier de siège de véhicule prévu pour amoindrir les effets d'un choc frontal du véhicule sur le corps, et en particulier la tête, d'un passager se trouvant sur un siège placé derrière le dossier considéré. L'invention concerne également un siège de véhicule comportant un tel dossier.

### Art antérieur et problème posé

Le volume et le poids des sièges de véhicules sont des préoccupations auxquelles on cherche à répondre pour diminuer l'empreinte environnementale du transport, en particulier dans les moyens de transports collectifs. La diminution du volume et du poids ne doit cependant pas avoir d'impact sur la sécurité du passager.

Dans le transport aérien en particulier, la réduction du volume et du poids est exacerbée par l'énergie nécessaire pour un vol donné. La sécurité étant un élément incontournable, les stratégies d'allègement doivent se faire sans compromettre la résistance du siège. En réduisant le volume unitaire des sièges, il est possible de diminuer l'espacement entre deux rangées de sièges et d'augmenter le nombre de passagers pouvant prendre place au sein des aéronefs ou, à l'inverse, d'augmenter l'espace dévolu à chaque passager. Un meilleur remplissage de l'aéronef permet, à flux de passagers constant sur une ligne aérienne, de diminuer le nombre de vols. De même, la réduction du poids unitaire des sièges limitant l'énergie nécessaire pour un vol donné, le carburant nécessaire pour ces vols s'en trouve économisé, ce qui réduit d'autant les rejets de gaz à effet de serre.

L'amorti de la plupart des sièges d'aéronef actuels est basé sur une déformation du dossier. Le passager situé à l'arrière d'un dossier donné vient percuter le dossier du siège se trouvant devant lui, lors d'un crash frontal violent. La structure rigide dudit dossier se plie lors du choc, limitant ainsi le choc en retour de la tête du passager.

Le brevet WO/2012/024159 par exemple montre un mécanisme d'inclinaison du dossier d'un siège d'aéronef. En cas de crash, l'articulation entre le dossier et l'assise se rompent, et le dossier vient basculer vers l'avant.

Le brevet EP1719701 propose comme moyen d'absorption d'énergie l'utilisation d'un vérin hydraulique ou pneumatique dans le cas d'un siège de sécurité pour aéronef. En cas de crash, le choc est amorti par le vérin, via un frottement fluide.

Le brevet WO2002018204 propose comme moyen d'absorption d'énergie l'utilisation de ressort, une extrémité étant fixée à la structure de l'avion, et une autre au support du siège. En cas de crash, le ressort permet d'amortir par déformation élastique les mouvements du passager.

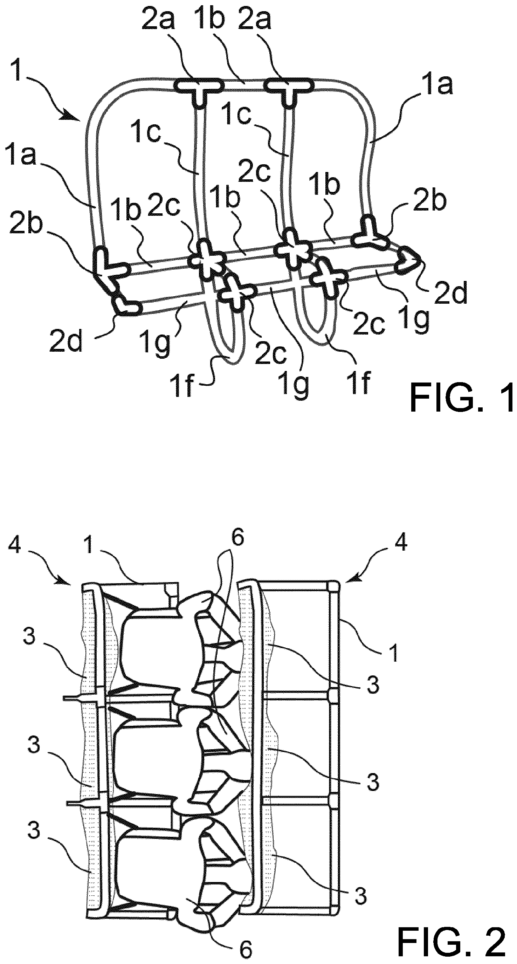

La demande internationale WO 2012/104248 divulgue un siège ultra léger pour aéronef, de faible encombrement et de poids relativement faible, tout en alliant le confort du passager, notamment au niveau de l'assise et du dossier. En référence à la figure 1, un exemple de structure 1 de siège pour former un ensemble de trois sièges est représenté. La structure 1 est constituée de plusieurs éléments tubulaires 1A, 1B, 1C, 1D, 1F et 1G, assemblés les uns aux autres par différentes pièces de jonction 2A, 2B, 2C, 2D. On constate ainsi que des espaces vides sont ménagés au niveau des assises et des dossiers des trois sièges, afin que des textiles puissent s'étendre entre les éléments tubulaires et constituer les éléments fonctionnels des sièges.

Par ailleurs, la sécurité des passagers doit être assurée en cas de choc violent, notamment frontal, de l'aéronef, par exemple en cas de crash. Dans le cas de la structure 1, décrite à la figure 1, le dossier du siège ne se plie pas lors du choc, puisque la structure 1 ne se déforme pas. Par contre, comme décrit dans la demande internationale WO 2012/130809, l'utilisation d'un textile absorbeur d'énergie tendu entre les éléments tubulaires 1A-1G de la structure 1 permet d'absorber l'énergie du choc en ralentissant de façon progressive le passager.

La figure 2 montre un exemple de réalisation d'un ensemble de deux rangées 4 de trois sièges selon l'art antérieur. Lors d'un choc frontal, chaque passager 6 est projeté vers l'avant, contre l'arrière du dossier 3 du siège placé devant lui. Les dossiers 3, constitués de tissus absorbeurs d'énergie, tendus au milieu de la structure 1, se déforment et absorbent l'énergie du choc, en ralentissant de façon progressive le passager 6, notamment sa tête.

Or, le textile constituant la partie centrale du dossier 3 se déforme élastiquement et transmet des efforts au niveau de la structure 1 du siège, au niveau du dossier. Si cette structure 1 possède, au niveau du dossier, une forme ergonomique comportant des courbes alternativement concaves et convexes, ces efforts peuvent conduire à une rupture du matériau, par exemple un composite, constituant la structure 1, au niveau de ces courbes.

De plus, l'utilisation d'un tissu déformable pour l'amortissement du choc peut être contraignante, notamment en termes de coût et de confort pour le passager assis sur le siège. De la sorte, il peut être souhaitable de recourir à l'usage d'un tissu peu ou pas déformable, afin de pouvoir offrir un revêtement sur mesure au client, en utilisant par exemple des tissus décoratifs variés mais dont les propriétés mécaniques sont plus faibles que celles des tissus techniques.

Le but principal de l'invention est de proposer un siège permettant de limiter le poids et le volume de l'ensemble, tout en garantissant la sécurité du passager.

D'autre part, le document US 2006/255633 A1 se rapporte à un siège de passager pour véhicule, avec des parties capitonnées pouvant s'arracher. On constate l'utilisation de coutures, relativement longues et destinées à être arrachées pour permettre à une partie centrale du dossier de se détacher d'une partie plutôt périphérique du dossier restant fixe.

La partie centrale est solidaire d'un cadre intérieur pouvant pivoter avec cette partie déchirable. Puisque la ceinture de sécurité du ou des passagers est fixée à ce cadre intérieur, l'ensemble passagers/ceintures de sécurité/cadre intérieur/parties déchirables peut basculer en avant.

### Résumé de l'invention

Un concept de l'invention est d'amortir un passager projeté contre l'arrière du siège lors d'un crash en utilisant un textile. Pour ce faire, on se propose de répartir différemment les efforts accumulés dans la partie centrale du dossier sur le tissu déformable, et de transmettre l'énergie par d'autres trajets à la structure du siège, au niveau du dossier, en cas de crash du véhicule.

L'objet principal de l'invention est donc un dossier de siège d'aéronef comportant:- une structure de siège définissant au moins partiellement le dossier du siège,- un ensemble textile fixé sur la structure du siège et comportant au moins une zone linéaire fragilisée entre au moins deux portions de l'ensemble textile, caractérisé en ce que ladite au moins une zone linéaire fragilisée est constituée par au moins deux zones linéaires fragilisées sécantes en un point de croisement dans la partie centrale de l'ensemble textile, pour que ladite au moins une zone linéaire fragilisée se déchire, lors d'un choc sur l'ensemble textile dans des conditions accidentelles, provoqué par la tête d'un passager placé derrière le dossier du siège, pour absorber au moins en partie l'énergie d'impact du choc, en particulier lors de conditions accidentelles de l'aéronef.

La structure de siège peut être une ossature comportant au moins dans sa partie définissant au moins partiellement le dossier du siège un espace vide.

L'ensemble textile peut se superposer au moins partiellement à l'espace vide.

Dans une réalisation envisagée du dossier selon l'invention, ladite au moins une zone linéaire fragilisée n'est apte à se déchirer que lors d'un choc d'une force d'impact supérieure à 10 N/cm², mieux 30 N/cm² : cette valeur a pour objet de ne pas enclencher l'ouverture de la zone textile fragilisée dans les conditions normales d'utilisation du siège. En particulier, lors de turbulences dans le moyen de transport, l'appui d'un passager sur le dossier pour se stabiliser ne doit pas ouvrir la zone fragilisée. Cette valeur ne doit cependant pas être trop élevée, afin qu'elle puisse s'ouvrir en cas d'accident à des pressions suffisamment basses pour ne pas faire courir de risques au passager amorti.

Dans une autre réalisation envisagée du dossier selon l'invention, ladite au moins une zone linéaire fragilisée comporte au moins l'un des moyens de fragilisation suivants : une couture, une bande auto-agrippante réversible, un ensemble de boutons à pression, percements réguliers, fermeture éclair, entre autres.

De préférence, la résistance au déchirement de ladite au moins une zone linéaire fragilisée est rendue croissante sur au moins une partie de ladite au moins une zone linéaire fragilisée, par l'ajout d'au moins un moyen de fragilisation supplémentaire, notamment par l'ajout de coutures supplémentaires. On peut ainsi obtenir une concentration croissante des moyens de fragilisation.

Ladite au moins une zone linéaire fragilisée peut en outre être conçue pour que, après déchirement, une ouverture soit obtenue dans le dossier, l'ensemble textile se trouvant en grande partie ouvert.

Une disposition complémentaire au dossier selon l'invention prévoit que l'ensemble textile n'est apte à se déchirer, en dehors de ladite au moins une zone linéaire fragilisée, que lors d'un choc d'une force d'impact supérieure à 10 N/cm², mieux 30 N/cm² pour les raisons précédemment énoncées.

Ladite zone linéaire est avantageusement apte à se déchirer en priorité lors du choc.

Un deuxième objet principal de l'invention est un siège d'aéronef caractérisé en ce qu'il comporte un dossier de siège d'aéronef tel que défini précédemment.

### Liste des figures

L'invention et ses différentes caractéristiques techniques seront mieux comprises à la lecture de la description détaillée qui va suivre, avec plusieurs exemples de mise en oeuvre non limitatifs de celle-ci, ainsi qu'à l'examen des figures schématiques et partielles, sur lesquelles :
- la figure 1 montre, en perspective, une structure de siège d'un dossier selon l'invention ;
- la figure 2 montre, en perspective, un ensemble de sièges de l'art antérieur ;
- les figures 3A et 3B montrent une première mise en oeuvre du dossier;
- la figure 4 montre une deuxième mise en oeuvre du dossier;
- les figures 5A et 5B montrent le fonctionnement de la réalisation décrite par la figure 4 ;
- les figures 6A et 6B montrent une réalisation du dossier selon l'invention.

### Description détaillée de plusieurs réalisations de l'invention

Le terme « dossier » est utilisé dans la présente description pour désigner la partie supérieure et centrale d'un siège sur lequel s'appuie, par son dos, un passager et possédant une face arrière faisant face à un passager assis sur le siège placé derrière le siège considéré. Le dossier est donc constitué, par une structure de siège et par un ensemble textile placé au milieu de la partie supérieure de la structure du siège.

En considérant les sièges d'aéronefs tels que décrits par la figure 2, le siège selon l'invention est basé sur un concept consistant à chercher à éviter les concentrations des contraintes au niveau des courbes de la structure du dossier, lors d'un choc frontal de l'aéronef et, par conséquent, lors de la précipitation de la tête du passager se trouvant derrière le siège considéré. On se propose donc d'utiliser un matériau textile pour constituer le dossier, et dont la géométrie puisse changer au-delà d'un certain seuil de contrainte. On constate, en effet, que la déformation élastique de l'ensemble textile induit des efforts importants et prolongés dans la structure du siège, au niveau du dossier, lors d'un crash frontal de l'avion. Cette structure du siège ne peut alors pas résister.

Il a donc été choisi de concevoir un ensemble textile se déformant élastiquement, notamment par le fait qu'il puisse se rompre à certains endroits déterminés à l'avance, lorsque la force exercée sur cet ensemble textile excède un seuil prédéterminé. Dans cette optique, le dossier du siège selon l'invention présente deux conformations. La conformation normale, c'est-à-dire lors de l'utilisation du siège, permet au passager d'être confortablement installé. La conformation après dépassement d'un certain seuil de force sur le dossier, par exemple lors d'un crash, qui permet alors l'amortissement du passager, et en particulier de sa tête sans la rupture de la structure du dossier.

Pour obtenir ce changement de géométrie, on se propose d'intégrer au textile une ou plusieurs zones linéaires fragilisées qui peuvent donc rompre au-delà d'une certaine contrainte prédéterminée. Différentes techniques et technologies ont été développées pour réaliser de telles zones linéaires fragilisées, par exemple une bande auto-agrippante réversible, une couture ou des boutons à pression. On pourrait même envisager des percements ponctuels en ligne de l'ensemble textile, tels que des pointillés. Ainsi, ces technologies permettent de rendre solidaires au moins deux parties de l'ensemble textile, tant que la contrainte exercée sur celui-ci n'excède pas la limite prédéterminée. Au-delà de cette contrainte, l'ensemble textile rompt. En d'autres termes, la bande auto-agrippante réversible ou les boutons à pression s'ouvrent, ou bien les coutures se déchirent. L'ensemble textile présente donc une structure mécanique complètement modifiée et les chemins de transmission des efforts vers la structure de siège sont modifiés.

La ou les zones linéaires fragilisées sont donc de résistance moindre que le reste de l'ensemble textile et se déchireront préférentiellement en cas d'impact sur le textile.

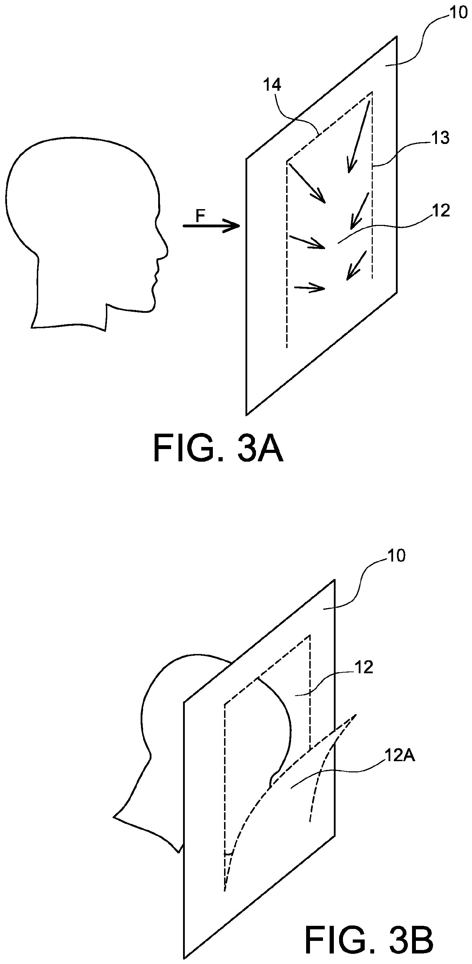

En référence aux figures 3A et 3B, une première solution pour éviter de transmettre des efforts aux courbes de la structure du dossier consiste à aménager une fenêtre 12 dans la partie centrale de l'ensemble textile 10 constituant le centre du dossier du siège selon l'invention. Cette fenêtre 12 est donc constituée, dans cette réalisation, de deux zones linéaires fragilisées verticales 13 jointes, dans leur extrémité supérieure, par une zone linéaire fragilisée 14 horizontale. Seule la partie inférieure de la fenêtre 12 n'est pas concernée par une zone linéaire fragilisée. Comme le montre la figure 3B, en cas de crash de l'aéronef dans lequel est placé le siège selon l'invention, les trois zones linéaires fragilisées, à savoir les deux zones linéaires fragilisées verticales 13 et la zone linéaire fragilisée horizontale 14 cèdent. La partie centrale constituée par la fenêtre 12 se déchire et se détache pour devenir une fenêtre détachée 12A par rapport au reste de l'ensemble textile 10. Ainsi, les forces transmises par la tête du passager se trouvant derrière le siège considéré provoque cette déchirure et ne sont pas transmises au bord de l'ensemble textile 10 et donc, par voie de conséquence, à la structure du siège, au niveau du dossier. Après avoir traversé la fenêtre ainsi créée, la tête du passager est amortie par sa ceinture de sécurité qui maintient le bas du corps sur le siège de derrière. Ceci peut permettre d'éviter que le passager ne choque, par sa tête, trop violemment le bas de la fenêtre 12. On rappelle que l'élasticité de l'ensemble textile, jusqu'à la rupture des zones linéaires fragilisées, dissipe une partie de l'énergie de la tête venant frapper le dossier du siège.

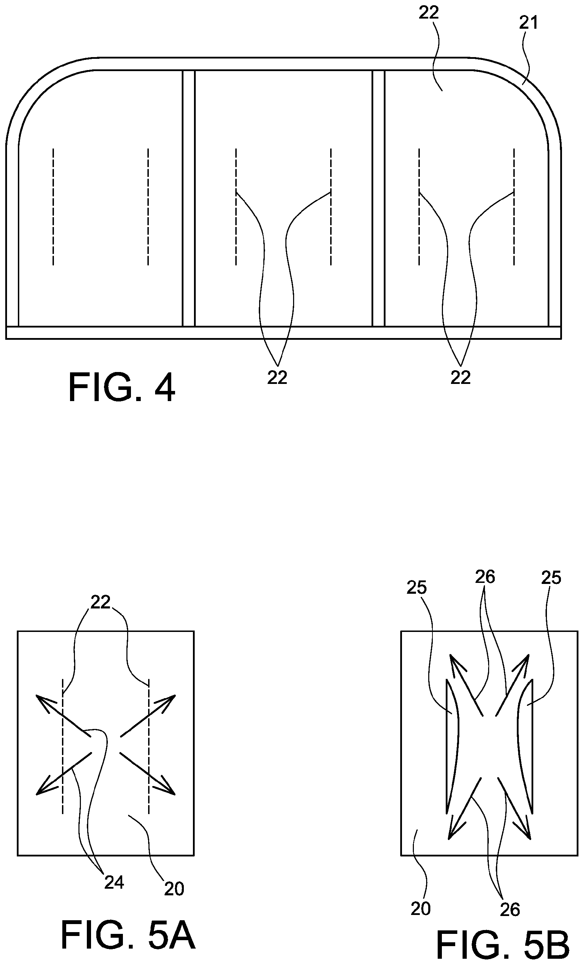

La figure 4 représente la partie supérieure d'un siège à trois places comportant une structure 21 du siège à l'intérieur de laquelle sont placés trois ensembles textiles 20 constituant chacun le dossier d'un passager. Au milieu de chaque élément tissé, se trouvent deux zones linéaires fragilisées 22 verticales et parallèles entre elles définissant une partie centrale au milieu de laquelle la tête du passager se trouvant sur le siège de derrière vient basculer, lors d'un choc dû à un crash de l'aéronef. Ces zones linéaires fragilisées 22 sont donc déchirables.

Pour expliquer le phénomène de changement de la répartition des forces sur l'ensemble textile, il faut se reporter aux figures 5A et 5B.

En effet, la figure 5A montre la répartition des forces 24, dues à l'impact du choc de la tête du passager se trouvant derrière le siège considéré, très probablement au milieu de l'ensemble textile 20 entre les deux zones linéaires fragilisées 22 verticales. Ces forces 24 sont donc orientées plutôt latéralement. En conséquence, ce sont les montants verticaux de la structure constituant le siège qui vont être sollicités au début de l'impact de la tête du passager frappant l'ensemble textile 20.

En se reportant à la figure 5B, à partir d'une pression prédéterminée, les deux zones linéaires fragilisées 22 verticales cèdent et commencent à s'ouvrir pour former des ouvertures 25. Les flèches 26 montrent donc l'orientation nouvelle des forces appliquées à l'ensemble textile 20. Ces forces sont donc plutôt d'orientation verticale et se reportent vers les parties inférieure et supérieure de la structure constituant le siège au niveau du dossier. En conséquence, les contraintes en flexion sur les montants verticaux de la structure, lors du début de l'impact (figure 5A), se transforment en contraintes de compression. La résistance du matériau, par exemple un matériau composite, constituant la structure du siège pouvant être bien meilleure en compression qu'en flexion ou en cisaillement, aucune crainte n'est à avoir concernant un éventuel endommagement de la structure du siège, au niveau du dossier. Le changement de l'orientation des forces dans une direction plus favorable à la résistance de la structure du dossier permet ainsi de renforcer la résistance à l'impact du siège.

Dans ce cas, on envisage de rajouter une petite bande de tissu plus déformable que le tissu constituant l'ensemble textile et placé le long des zones linéaires fragilisées pour limiter l'écartement des deux bords déchirés.

Toutefois, il est souvent avantageux que ladite au moins une zone fragilisée soit conçue pour que, après son déchirement, une ouverture soit obtenue dans l'ensemble textile.

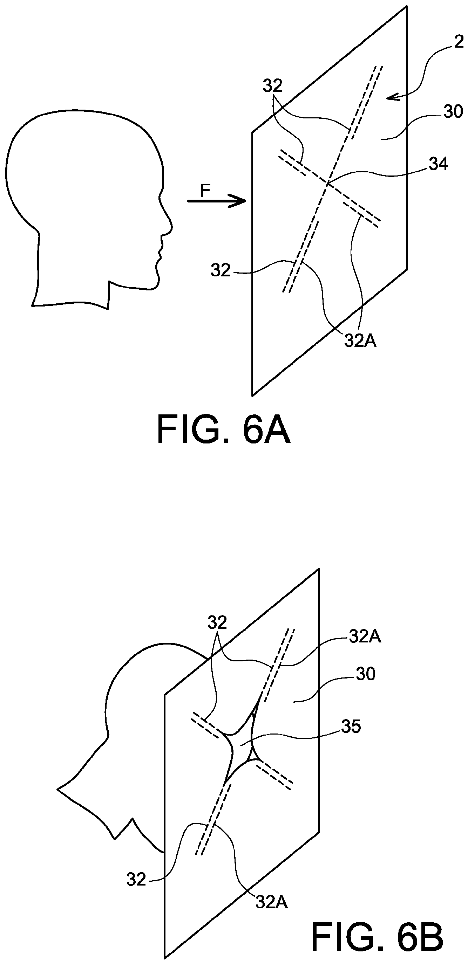

En référence aux figures 6A et 6B, on peut envisager de localiser le point du choc de la tête d'un passager sur la face arrière du dossier du siège placé devant, en travaillant sur la cinématique du choc en imaginant que ce choc ait lieu approximativement au centre de l'ensemble textile 30, les zones linéaires fragilisées peuvent être constituées de deux zones linéaires sécantes 32 se coupant ou se croisant en un point de croisement 34 relativement central par rapport à l'ensemble textile 30. De plus, il est possible de doubler ou tripler les zones linéaires fragilisées 32 au fur et à mesure que l'on parcourt une de ces zones linéaires 32 en partant du centre 34 et en s'écartant vers les bords extérieurs de l'ensemble textile 30. Ainsi, on renforce la résistance au déchirement de ces zones linéaires fragilisées 32 en rajoutant au moins une zone linéaire fragilisée supplémentaire 32A au fur et à mesure qu'un trou 35 se forme (voir figure 6B) correspondant au point de croisement 34 de la figure 6A. En d'autres termes, la tête du passager se trouvant sur le siège de derrière heurte le centre de l'ensemble textile 30, vers le point de croisement 34 et initie l'ouverture des zones linéaires fragilisées constituées par les deux zones linéaires 32 qui se croisent. L'extension de cette zone ouverte est donc rendue plus difficile par un doublement ou un triplement des coutures ou des autres moyens de fragilisation. La force de retenue de la tête du passager est ainsi relativement constante durant tout le choc.

On précise que, dans plusieurs de ces cas, la déchirure de la ou des zone(s) linéaire(s) fragilisée(s) provoque une ouverture conséquente dans le dossier, au moins dans sa face arrière dans le cas où le dossier présente une certaine épaisseur, due à la présence d'autres éléments que l'ensemble textile, notamment sur sa face avant.

La réalisation de toutes ces zones linéaires fragilisées peut être obtenue de plusieurs manières.

Une première est l'utilisation de bandes auto-agrippantes réversibles de type « scratch » ou « Velcro ® ». Dans ce cas, la contrainte à la rupture est typiquement de l'ordre de 10 N/cm². La réalisation se fait par piqûre d'une bande mâle d'un côté de la fente et d'une bande femelle de l'autre côté. Toutefois, l'ouverture et la fermeture répétée de cette bande auto-agrippante réversible ne doivent pas diminuer la résistance à la rupture et rendre, peu à peu, les fentes de plus en plus sensibles.

Une deuxième possibilité pour réaliser ces zones linéaires fragilisées est l'utilisation de coutures dimensionnées pour rompre à une contrainte prédéterminée. Ce dimensionnement prend en compte le type de fil utilisé ainsi que le nombre de points par centimètre de couture. Un dimensionnement typique est d'utiliser du fil polyester avec une couture simple à trois points par centimètre. Plusieurs piqûres peuvent être effectuées côte à côte, comme représenté aux figures 6A et 6B, pour renforcer, à partir d'un endroit déterminé la zone linéaire fragilisée. Il est également possible d'utiliser une deuxième bande auto-agrippante pour renforcer la résistance à l'arrachement dans le cas précédent.

Une troisième réalisation consiste à utiliser des boutons à pression. Pour renforcer la résistance au déchirement, la fréquence de placement des boutons à pression est renforcée au fur et à mesure de l'éloignement du point de croisement, dans le cas de la réalisation décrite par les figures 6A et 6B.

Une quatrième réalisation consiste effectuer des percements réguliers et alignés du textile. Ces percements orientent la déchirure du textile dans la direction choisie, et leur espacement permet de contrôler la force nécessaire pour l'ouverture puis la propagation de la déchirure.

Une cinquième réalisation consiste à utiliser des fermetures éclairs définissant la zone pouvant être ouverte, la résistance de la fermeture éclair permettant de dimensionner la force à appliquer pour initier la déchirure.

L'objet de ces zones linéaires fragilisées réalisées par des fentes déchirables est qu'elles ne soient utilisées qu'en cas de choc. Dans le cas d'un fonctionnement normal, ces zones linéaires fragilisées ne doivent pas être sollicitées et les fentes ne doivent pas être ouvertes. En conséquence, un passager de 70 kg s'appuyant contre la face arrière du dossier du siège ne doit pas risquer de déchirer l'ensemble textile du dossier. Ce dernier doit ainsi résister à une force de 700 N répartie uniformément sur l'ensemble textile du dossier. Dans le cas de la fenêtre 12 telle que représentée par les figures 3A et 3B, les angles définis par les zones linéaires fragilisées sont plus fragiles que le reste de l'ensemble textile. Une force de 700 N (70 kg) répartie sur un cercle de 5 cm de diamètre (environ 9 N/cm²), par exemple l'appui de la main d'un passager, ne déchire pas l'angle de la fenêtre.

## Revendications

1. Dossier de siège d'aéronef comportant:
- une structure de siège (1) définissant au moins partiellement le dossier du siège,
- un ensemble textile (10, 20, 30) fixé sur la structure du siège (1) et comportant au moins une zone linéaire fragilisée (13, 14, 22, 32) entre au moins deux portions de l'ensemble textile (10, 20, 30),
**caractérisé en ce que** ladite au moins une zone linéaire fragilisée (32) est constituée par au moins deux zones linéaires fragilisées (32) sécantes en un point de croisement (34) dans la partie centrale de l'ensemble textile (30), pour que ladite au moins une zone linéaire fragilisée se déchire, lors d'un choc sur l'ensemble textile dans des conditions accidentelles, provoqué par la tête d'un passager placé derrière le dossier du siège (1), pour absorber au moins en partie l'énergie d'impact du choc, en particulier lors de conditions accidentelles de l'aéronef.

2. Dossier selon la revendication 1, **caractérisé en ce que** la structure de siège est une ossature comportant au moins dans sa partie définissant au moins partiellement le dossier du siège (1) un espace vide, et **en ce que** l'ensemble textile (10, 20, 30) se superpose au moins partiellement à l'espace vide.

3. Dossier selon la revendication 1 ou 2, **caractérisé en ce que** ladite au moins une zone linéaire fragilisée (13, 14, 22, 32) n'est apte à se déchirer que lors d'un choc d'une force d'impact supérieure à 10 N/cm², mieux 30 N/cm², sur ladite zone fragilisée.

4. Dossier selon l'une des revendications précédentes, **caractérisé en ce que** ladite au moins une zone linéaire fragilisée (13, 14, 22, 32) comporte au moins l'un des moyens de fragilisation suivants : une couture, une bande auto-agrippante réversible, un ensemble de boutons à pression, percements réguliers, fermeture éclair.

5. Dossier selon la revendication 4, **caractérisé en ce que** la résistance au déchirement de ladite au moins une zone linéaire fragilisée (13, 14, 22, 32) est rendue croissante sur au moins une partie de ladite au moins une zone linéaire fragilisée par l'ajout d'au moins un moyen de fragilisation supplémentaire, notamment par l'ajout de coutures supplémentaires (32A, 32B).

6. Dossier selon l'une quelconque des revendications précédentes, **caractérisé en ce que** ladite au moins une zone linéaire (13, 14, 22, 32) est conçue pour que, après déchirement, une ouverture soit obtenue dans le dossier, l'ensemble textile (10, 20, 30) se trouvant en grande partie ouvert.

7. Siège d'aéronef, **caractérisé en ce qu'**il comporte un dossier de siège d'aéronef selon l'une quelconque des revendications précédentes.

## Patentansprüche

1. Rückenlehne eines Luftfahrzeugsitzes, aufweisend:
eine Sitzstruktur (1), die zumindest teilweise die Rückenlehne des Sitzes definiert,
eine Textilmaterialeinheit (10, 20, 30), die auf der Sitzstruktur (1) befestigt ist und mindestens eine geschwächte lineare Zone (13, 14, 22, 32) zwischen mindestens zwei Abschnitten der Textilmaterialeinheit (10, 20, 30) aufweist,
**dadurch gekennzeichnet, dass** die mindestens eine geschwächte lineare Zone (32) durch mindestens zwei geschwächte lineare Zonen (32) gebildet ist, die sich in einem Kreuzungspunkt (34) im zentralen Teil der Textilmaterialeinheit (30) schneiden, damit die mindestens eine geschwächte lineare Zone bei einem Aufprall auf die Textilmaterialeinheit bei Unfallbedingungen, hervorgerufen durch den Kopf eines hinter der Rückenlehne des Sitzes (1) platzierten Passagiers, zerreißt, um zumindest teilweise die Aufprallenergie zu absorbieren, insbesondere unter Bedingungen eines Unfalls des Luftfahrzeugs.

2. Rückenlehne nach Anspruch 1, **dadurch gekennzeichnet, dass** die Sitzstruktur ein Gerippetragwerk ist, das in dem Teil, der zumindest teilweise die Rückenlehne des Sitzes (1) definiert, einen Hohlraum aufweist, und dadurch, dass die Textilmaterialeinheit (10, 20, 30) zumindest teilweise den Hohlraum überlagernd angeordnet ist.

3. Rückenlehne nach Anspruch 1 oder 2, **dadurch gekennzeichnet, dass** das Zerreißen der mindestens einen geschwächten linearen Zone (13, 14, 22, 32) nur erfolgen kann, wenn auf die geschwächte Zone ein Aufprall mit einer Aufprallkraft von mehr als 10 N/cm², besser 30 N/cm² erfolgt.

4. Rückenlehne nach einem der vorhergehenden Ansprüche, **dadurch gekennzeichnet, dass** die mindestens eine geschwächte lineare Zone (13, 14, 22, 32) mindestens eine der folgenden Schwächungseinrichtungen aufweist: eine Naht, ein Klettband, eine Anordnung von Druckknöpfen, regelmäßig angeordnete Durchbrüche, einen Reißverschluss.

5. Rückenlehne nach Anspruch 4, **dadurch gekennzeichnet, dass** der Widerstand gegen ein Zerreißen der mindestens einen geschwächten linearen Zone (13, 14, 22, 32) auf zumindest einem Teil der mindestens einen geschwächten linearen Zone ansteigend ausgebildet ist, und zwar durch Hinzufügen von mindestens einer zusätzlichen Schwächungseinrichtung, insbesondere durch Hinzufügen von zusätzlichen Nähten (32A, 32B).

6. Rückenlehne nach einem der vorhergehenden Ansprüche, **dadurch gekennzeichnet, dass** die mindestens eine lineare Zone (13, 14, 22, 32) so ausgebildet ist, dass man nach dem Zerreißen eine Öffnung in der Rückenlehne erzielt, wobei sich die Textilmaterialeinheit (10, 20, 30) in einem zum großen Teil geöffneten Zustand befindet.

7. Flugzeugsitz, **dadurch gekennzeichnet, dass** er eine Rückenlehne eines Flugzeugsitzes nach einem der vorhergehenden Ansprüche aufweist.

## Claims

1. An aircraft seat back including:
- a seat structure (1) defining at least partly the seat back,
- a textile assembly (10, 20, 30) attached to the seat structure (1) and including at least one embrittled linear zone (13, 14, 22, 32) between at least two portions of the textile assembly (10, 20, 30),
**characterised in that** said at least one embrittled linear zone (32) consists of at least two embrittled linear zones (32) intersecting at a crossing point (34) in the centre part of the textile set (30), such that said at least one embrittled linear zone tears, during a shock on the textile assembly under accidental conditions, caused by the head of a passenger placed behind the back of the seat (1), to absorb at least partly the impact energy of the shock, in particular under accidental conditions of the aircraft.

2. The seat back according to claim 1, **characterised in that** the seat structure is a framework including at least in its part defining at least partly the seat back (1) an empty space, and **in that** the textile assembly (10, 20, 30) is superimposed at least partially to the empty space.

3. The seat back according to claim 1 or 2, **characterised in that** said at least one embrittled linear zone (13, 14, 22, 32) is only able to tear during a shock of an impact force higher than 10N/cm², or better 30N/cm², on said embritted zone.

4. The seat back according to one of the preceding claims, **characterised in that** said at least one embrittled linear zone (13, 14, 22, 32) includes at least one of the following embrittlement means: a seam, a reversible hook and loop tape, a set of snap fasteners, even punctures, and a zip fastener.

5. The seat back according to claim 4, **characterised in that** the tear strength of said at least one embrittled linear zone (13, 14, 22, 32) is made increasing on at least one part of said at least one embrittled linear zone by adding at least one further embrittlement means, in particular by adding further seams (32A, 32B).

6. The seat back according to one of the preceding claims, **characterised in that** said at least one embrittled linear zone (13, 14, 22, 32) is designed such that, after tearing, an aperture is achieved in the seat back, the textile assembly (10, 20, 30) being mostly open.

7. An aircraft seat, **characterised in that** it includes an aircraft seat back according to any of the preceding claims.
